# EUROPÄISCHE PATENTSCHRIFT

(11) **EP 0 487 455 B1**
(45) Veröffentlichungstag und Bekanntmachung des Hinweises auf die Patenterteilung: **25.10.1995**
(21) Anmeldenummer: 91810885.3
(22) Anmeldetag: 15.11.1991
(51) Int. Cl.: B01J 57/04, B01J 49/00, B01J 47/04

(54) **Verfahren und Einrichtung zur Entsalzung von wässrigen Flüssigkeiten**
Process and apparatus for desalinization of aqueous liquids
Procédé et installation pour la dessalement de liquides aqueux

(30) Priorität: 19.11.1990 CH 3670/90
(43) Veröffentlichungstag der Anmeldung: 27.05.1992
(73) Patentinhaber: Christ AG, CH-4147 Aesch (CH)
(72) Erfinder: Knosala, Peter, CH-4148 Pfeffingen (CH)
(74) Vertreter: Zimmermann, Hans, Dr.

(56) Entgegenhaltungen:
- DE-A- 3 037 850
- GB-A- 902 347
- GB-A- 1 005 981
- GB-A- 1 239 964
- US-A- 3 527 718
- US-A- 3 537 989

## Beschreibung

Die vorliegende Erfindung bezieht sich auf ein Verfahren zur Entsalzung von salzhaltigen wässrigen Lösungen mit einem Mischbettionenaustauschfilter, in dem Kationenaustauscherharz(e) und Anionenaustauscherharz(e) innig gemischt vorliegen und dem mindestens ein Kationenaustauscherharzfilter und mindestens ein Anionenaustauscherharzfilter vorgeschaltet ist, sowie auf eine zur Durchführung dieses Verfahrens geeignete Einrichtung.

Es ist aus Ullmann's Encyclopedia of Industrial Chemistry, 5. Auflage, Band A14, Seiten 425-428 bekannt, zur Feinreinigung von salzhaltigem Wasser in Wasser-Vollentsalzungsanlagen einer Gruppe von sogenannten Arbeitsfiltern, mit deren Hilfe der grösste Teil der gelösten Stoffe aus dem Wasser entfernt wird und die mindestens ein Kationenaustauscherharzfilter und in der Regel mindestens ein Anionenaustauscherharzfilter umfasst, ein Mischbettfilter nachzuschalten. Letzteres dient der Fein- oder Endreinigung des Wassers als sogenanntes Polisherfilter, indem es die letzten Spuren von gelösten Verunreinigungen (in der Regel weniger als 0,5-2 % des ursprünglichen Salzgehaltes) entfernt, und/oder als sogenanntes Sicherheits- oder Polizeifilter zum Abfangen von Salzdurchbrüchen bei unvorhersehbaren, betrieblichen Unregelmässigkeiten. In beiden Funktionen werden die Ionenaustauscherharze in dem Mischbettfilter nur zu einem viel kleineren Bruchteil ihrer Austauschkapazität pro Zeiteinheit mit Kationen bzw. Anionen beladen und brauchen daher erst nach viel längeren Betriebszeiten regeneriert zu werden als die Ionenaustauscherharze der dem Mischbettfilter vorgeschalteten Arbeitsfilter. Zudem ist die Zusammensetzung der durch diese Filter zu entfernenden Stoffe entscheidend verschieden von der Zusammensetzung der Stoffe, die auf den vorgeschalteten Arbeitsfiltern aufgenommen werden. Bei den noch auf das nachgeschaltete Mischbettfilter gelangenden Stoffen handelt es sich zur Hauptsache um Stoffe, die schlechter aufgenommen werden, insbesondere um echt gelöste Kieselsäure, aber auch um teilweise polymerisierte Kieselsäure und um organische Stoffe. Solche Stoffe werden auch schlechter wieder von Ionenaustauschharzen abgetrennt und können auf den Harzen altern, wodurch ihre Ablösung von den Harzen noch weiter erschwert wird. Diese Areitsweise nach dem Stand der Technik hat darum mindestens die folgenden Nachteile:
- Als Fein- oder Endreinigungsfilter betriebene Mischbettfilter haben aufgrund der geringen, durch sie zu entfernenden Konzentrationen an gelösten Stoffen, eine sehr lange Standzeit von Wochen bis Monaten. Dies wirkt sich darum nachteilig aus, weil viele der aufgenommenen Stoffe auf und in den Ionenaustauschharzen altern, z.B. durch weitere Polymerisierung der Kieselsäure und die festere Bindung organischer Stoffe durch ihr weiteres Eindringen in die feinen Poren der Ionenaustauschharze. Dies führt zu einer irreversiblen Schädigung der Harze und zur Herabsetzung ihrer Wirksamkeit.
- Auf der anderen Seite können trotz der langen Standzeit der Feinreinigungsfilter kaum Regeneriermittel eingespart werden, weil zur Ablösung der schwer entfernbaren Stoffe grosse Regeneriermittelüberschüsse erforderlich sind und die Wiederverwendung der gebrauchten Regeneriermittel wegen ihrer Verunreinigung mit vorwiegend schwer entfernbaren Stoffen in der Regel nicht möglich ist.
- Als Sicherheits- oder Polizeifilter betriebene Mischbettfilter können die Sicherheitsfunktion nur erfüllen, solange ihre Aufnahmekapazität noch so gross ist, dass unkontrollierte Ionendurchbrüche durch die vorgeschaltenen Arbeitsfilter auf dem Sicherheitsfilter aufgefangen werden können. Wenn, wie dies üblich ist, die Funktionen "Sicherheitsfilter" und "Feinreinigungsfilter" kombiniert werden und das Mischbettfilter bis praktisch zu seiner vollen Beladung, d.h. bis zum Durchbruch gefahren wird, nimmt die Sicherheit, welche diese Mischbettfilter bieten, bis zu Null stetig ab. Wenn dann solche Filter überfahren, d.h. über die volle Beladung hinaus betrieben werden, kommt es sogar zu einer Eluierung bereits auf dem Mischbett aufgenommener Stoffe, die für viele Verbraucher von vollentsalztem Wasser schädlicher sind als die bei einem Ueberfahren der Arbeitsfilter im Wasser verbleibenden Stoffe.
- Um die Entsalzung wirtschaftlich zu gestalten, wird der auf das nachgeschaltete Mischbettfilter gelangende Restsalzgehalt möglichst gering gehalten. Dazu müssen die vorgeschalteten Arbeitsfilter oft mit Verfahren und Vorrichtungen regeneriert werden, die einen aufwendigeren und einen nur mit wesentlich grösserem Aufwand automatisierbaren Betrieb verlangen.

Die Erfindung eliminiert diese Nachteile. Sie verzichtet vollständig auf den Gedanken, die Qualität des entsalzten Wassers schon vor dem als letzte Stufe eingesetzten Mischbettfilter der geforderten Endqualität möglichst nahe zu bringen und dieses Mischbettfilter nur noch als Feinreinigungs- und/oder Polizeifilter zu verwenden. Sie strebt im Gegenteil an, die Laufzeit (d.h. die Dauer zwischen zwei Regenerationen) des nachgeschalteten Mischbettfilters der Laufzeit der vorgeschalteten Arbeitsfilter anzugleichen, d.h. auch diesem Filter einen Teil der Entsalzungsarbeit zu überlassen, und dann die gleichartigen Ionenaustauschharze des Mischbettfilters und der vorgeschalteten Arbeitsfilter miteinander im Verbund zu regenerieren. Es werden nicht mehr Arbeits- und Endreinigungsfilter unterschieden. Trotzdem die nachgeschalteten Mischbettfilter einen Teil der Entsalzungsarbeit übernehmen, erfüllen sie die Feinreinigungsfunktion und die Sicherheitsfunktion sogar besser als Mischbettfilter in der derzeit üblichen Schaltung.

Das erfindungsgemässe Verfahren ist somit dadurch gekennzeichnet, dass
a) das nachgeschaltete Mischbettfilter nicht nur als Feinreinigungs- und/oder Sicherheitsfilter, sondern ebenso wie die vorgeschalteten Kationen- und Anionenaustauscherharzfilter als Arbeitsfilter betrieben wird und der Gehalt an Verunreinigungen nach den vorgeschalteten Kationen- und Anionenaustauscherharzfiltern noch mehr als 2% der ursprünglichen Verunreinigungen beträgt und
b) die zur Regeneration der Ionenaustauscherharze des Mischbettfilters verwendeten Regeneriermittellösungen danach zur Regeneration der Ionenaustauscherharze der dem Mischbettfilter vorgeschalteten Kationen- und Anionenaustauscherharzfilter dienen.

Grundlage für die Durchführung des erfindungsgemässen Verfahrens ist die räumliche Trennung der verschiedenen Harze, so dass die Harze der vorgeschalteten Filter mit den zur Regeneration der Mischbettfilterharze verwendeten Regeneriermittellösungen regeneriert werden können. Die erfindungsgemässe Verwendung des nachgeschalteten Mischbettfilters als Arbeitsfilter ist so zu verstehen, dass dieses nicht wie bei herkömmlichen Vollentsalzungsanlagen nur zur Entfernung letzter Spuren von weniger als 0,5-2 % der ursprünglichen Verunreinigungen dient, sondern der Gehalt an Verunreinigungen nach den vorgeschalteten Kationen- und Anionenaustauscherharzfiltern noch deutlich höher sein kann und beispielsweise etwa 5-25 % der ursprünglichen Verunreinigung betragen kann.

In den beiliegenden Zeichnungen zeigen
Fig. 1 den Chloridionengehalt eines mit einem Anionenaustauscherharz im Gleichgewicht stehenden Wassers in Abhängigkeit von der Beladung des Anionenaustauscherharzes mit Chloridionen bei verschiedenen pH-Werten und
Fig. 2 eine Vorrichtung zur gleichzeitigen und getrennten Abnahme der zur Regeneration der Ionenaustauscherharze eines Mischbettfilters verwendeten Regeneriermittellösungen, die Bestandteil einer erfindungsgemässen Einrichtung ist.

Beim erfindungsgemässen Verfahren werden die zur Regeneration der Ionenaustauscherharze des Mischbettfilters verwendeten Regeneriermittellösungen vorzugsweise durch zwei oberhalb bzw. unterhalb der Trennfläche zwischen den auf hydraulischem Wege getrennten Ionenaustauscherharzen des Mischbettfilters in zwei horizontalen Ebenen angeordnete Flüssigkeitsableitsysteme gleichzeitig, aber getrennt abgezogen.

Es ist auch vorteilhaft, wenn man durch mindestens ein in mindestens einer horizontalen Ebene zwischen den beiden Flüssigkeitsableitsystemen angeordnetes Flüssigkeitseinleitsystem mindestens eine Flüssigkeit einleitet, um die beiden Regeneriermittellösungen voneinander getrennt zu halten.

Die folgenden Erläuterungen verdeutlichen, wie mit dem erfindungsgemässen Verfahren das reinstmögliche Wasser mit minimalem Aufwand, insbesondere mit geringstem Regeneriermittelaufwand hergestellt werden kann:
1) Die letzten Prozente der zur Wasservollentsalzung zu leistenden Arbeit können mit Mischbettionenaustauschfiltern am wirtschaftlichsten erbracht werden, da darin der Austausch gegen Wasserstoffionen und Hydroxylionen praktisch bei pH 7 erfolgt, wo die Summe dieser dissozierten Ionen am kleinsten ist. Im Falle des Austausches von Chloridionen gegen Hydroxylionen stellt sich z.B. im Mischbett folgendes Gleichgewicht ein:

   -R⁺OH⁻ + Na⁺ + Cl⁻ ⇄ -R⁺Cl⁻ + Na⁺ + OH⁻ (1)

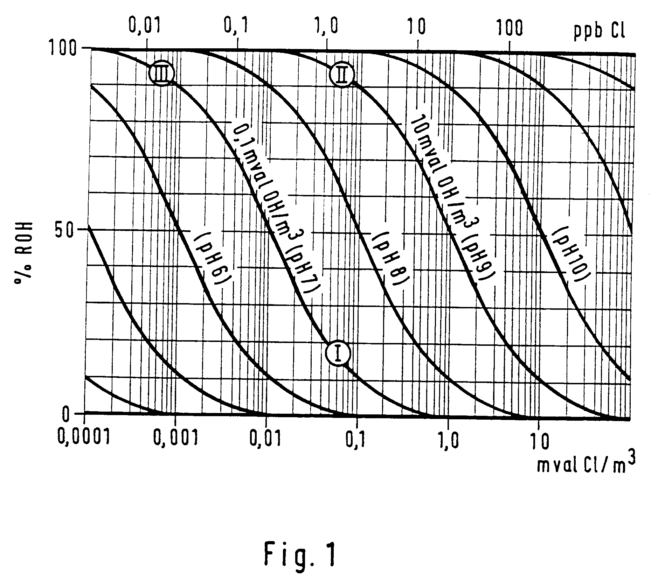

   wobei -R⁺ das Fest-Ion darstellt, das im Gerüst des Anionenaustauschers verankert ist, und das Gegen-Ion OH⁻ gegen bewegliche Ionen gleichen Ladungsvorzeichens, die als Co-Ionen bezeichnet werden (im vorliegenden Falle Cl⁻) ausgetauscht wird. Es gilt folgende Beziehung: 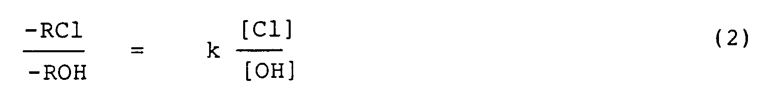 wobei [Cl] und [OH] die Konzentrationen der Chlorid- bzw. Hydroxylionen sind. Der Gleichgewichtskoeffizient k hat für stark basische Anionenaustauscher vom Typ I, deren funktionelle Gruppe [= Fest-Ion (Ankergruppe) + Gegen-Ion] der Formel: 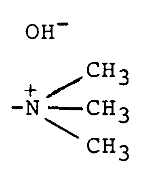 entspricht, einen Wert von 10 bis 12. Für den Wert k = 10 ergibt sich die in Fig. 1 wiedergegebene graphische Darstellung, aus der der Gehalt des Anionenaustauscherharzes an Hydroxylionen (ROH) und damit auch an Chloridionen zu entnehmen ist, der bei einem bestimmten pH-Wert mit einem bestimmten Chloridgehalt des Wassers im Gleichgewicht steht.
   In der Arbeitszone des Mischbettfilters, das heisst, in der Zone, in welcher sich das Austauschgleichgewicht einstellt, liegt der pH-Wert konstant bei ca. 7, weil die im Wasser gelösten Kationen und Anionen gleichzeitig entfernt und gegen Wasserstoff- bzw. Hydroxylionen ausgetauscht werden. Da die Chloridionenkonzentration in Wasser nach Gleichung 2 mit der Hydroxylionenkonzentration zusammenhängt und dieser proportional ist und die Hydroxylionenkonzentration bei pH = 7 gleich der Wasserstoffionenkonzentration gleich 10⁻⁷ Mol/kg ist, während die Kationenkonzentration in entsprechender Weise der Wasserstoffionenkonzentration proportional ist, ist die Gesamtkonzentration von Chloridionen und Kationen bei pH = 7 proportional zu 2·10⁻⁷, während sie z.B. bei pH = 8 proportional zu der Summe aus 10⁻⁸ und 10⁻⁶, das heisst, praktisch um eine Zehnerpotenz grösser ist. Somit ist die bei Verwendung eines bei pH = 7 arbeitenden Mischbettfilters erzielbare Konzentration der ionalen Verunreinigungen am kleinsten.

In Fig. 1 sind drei in der Wassertechnik besonders wichtige Anwendungsbereiche hervorgehoben:
I : In der Kraftwerkstechnik wird Wasser mit einem Chloridgehalt von rund 1 ppb benötigt. Dieses kann bei einem pH-Wert von 7 in der Arbeitszone des Mischbettfilters schon hergestellt werden, wenn Hydroxylionen an nur rund 20% der Fest-Ionen des Anionenaustauscherharzes gebunden sind.
II : Beträgt der pH-Wert in der Arbeitszone 9, so müssen zur Erzielung des gleichen Chloridgehaltes Hydroxylionen an über 90% aller Fest-Ionen gebunden sein.
III: Weist das Anionenaustauscherharz den gleichen hohen Regenerationsgrad von 90% auf, so kann bei einem pH von 7 in der Arbeitszone Wasser mit einem Chloridgehalt von rund 0,01 ppb erzeugt werden, wie es in der Halbleiterindustrie schon in nächster Zeit verlangt werden wird.

2) Beim erfindungsgemässen Verfahren werden die Ionenaustauscherharze, aus denen das Mischbettfilter besteht, räumlich so voneinander getrennt, dass sich die zu ihrer Regeneration verwendeten Säuren bzw. Laugen nach der Regeneration nicht mischen und somit anschliessend auch zur Regeneration der dem Mischbettfilter vorgeschalteten Kationen- und Anionenaustauscherharzfilter verwendet werden können. Dank dieser Verbundregeneration kann der bei der Regeneration der Ionenaustauscherharze des Mischbettfilters aufgewendete Regeneriermittelüberschuss bei der Regeneration der Ionenaustauscherharze der vorgeschalteten Kationen- und Anionenaustauscherharzfilter ausgenützt werden.
   Schon die US-Patentschrift 3 537 989 hat es sich zur Aufgabe gemacht, die zur Mischbettfilterregeneration verwendete Säure noch zur Regeneration des vorgeschalteten Kationenaustauscherharzfilters zu verwenden. Dabei ging es einzig um eine Verminderung des Säureeinsatzes und nicht auch gleichzeitig um alle anderen mit der vorliegenden Erfindung realisierbaren Vorteile. Es geht in diesem US-Patent insbesondere nicht darum, das Mischbettfilter gleichzeitig und in einem der Aufgabenstellung angepassten Verhältnis als Arbeitsfilter, Feinreinigungs-und Sicherheitsfilter einzusetzen. Eine Voraussetzung für die vorliegende Erfindung, das Vorhandensein eines vorgeschalteten Anionenaustauscherharzfilters fehlt dort. Zudem ist eine Verminderung des Säureverbrauchs ohne die gleichzeitige Verminderung des Laugeverbrauchs in der Regel wertlos, da die abzuleitenden, verbrauchten Regeneriermittel zur Befolgung der Abwasservorschriften praktisch neutral sein müssen. Einseitig eingesparte Regeneriersäure muss sonst in der Abwasserbehandlung wieder zugegeben werden. Eine Regeneriermitteleinsparung und damit eine Entlastung der Umwelt ist erst gegeben, wenn der Einsatz beider Regeneriermittel, d.h. von Säure und von Lauge, vermindert werden kann.
3) Da man das oder die vorgeschalteten Kationen- bzw. Anionenaustauscherharzfilter nicht so auslegen muss, dass sie den grössten Teil der ional gelösten Stoffe aus dem zu entsalzenden Wasser entfernen, weil auch das Mischbettfilter als Arbeitsfilter betrieben wird, braucht man zur Regeneration der vorgeschalteten Ionenaustauscherfilter weniger Regeneriermittel aufzuwenden, als wenn das Mischbettfilter nur als Sicherheits- oder Polizeifilter dient.
4) Dank des stabilen pH-Wertes in der Arbeitszone des Mischbettfilters hängt die Qualität des erzeugten Reinwassers in der Praxis nicht mehr von variablen Voraussetzungen, wie Veränderungen von Rohwasserqualität sowie Druck, Temperatur und Konzentration des Rohwassers und der Regeneriermittellösungen ab. Deshalb braucht man bei der Regeneration keinen zusätzlichen Regeneriermittelüberschuss mehr aufzuwenden, um bei unvorhersehbaren Abweichungen von den üblichen Randbedingungen einen störungsfreien Betrieb zu gewährleisten.
5) Dank der häufigen und immer mit einem relativ hohen Ueberschuss erfolgten Regeneration der Mischbettfilterharze, werden diese immer zu einem hohen Grade mit OH-Ionen beladen. Die Anionenaustauscherharze stehen so mit Wasser mit einem extrem geringen Chloridgehalt im Gleichgewicht, ungefähr so, wie es der Gleichgewichtszustand III in Figur 1 darstellt. Es wird Wasser mit minimalem Ionenrestgehalt erzeugt.
6) Auch bezüglich organischer Stoffe und kolloidaler Kieselsäure bleiben die Harze dank der häufigen und intensiven Regenerationen sauber. Austauschkapazität und Austauschkinetik bleiben erhalten.
7) Trotz der weniger auf die Spitze getriebenen Auslegung der vorgeschalteten Arbeitsfilter und damit höherer Leckage dieser Filter, verbleibt auf den nachgeschalteten Mischbettfiltern eine höhere Sicherheitskapazität für unvorhersehbare Unregelmässigkeiten als bei einem Sicherheitsfilter nach dem Stand der Technik.

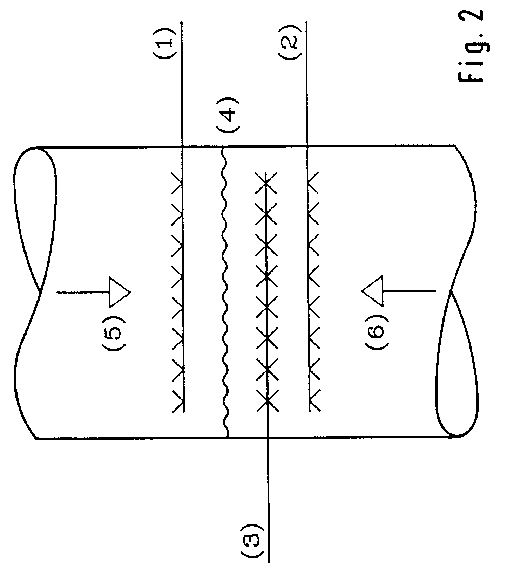

Die für die Verbundregeneration erforderliche räumliche Trennung der Kationen- und Anionenaustauscherharze des Mischbettfilters kann in der Praxis unter Berücksichtigung der gegebenen Verhältnisse und der Anforderungen an die Reinwasserqualität nach beliebigen Methoden gemäss dem Stand der Technik durchgeführt werden. Gemäss einer bevorzugten Ausführungsform werden die zur Regeneration der auf hydraulischem Wege getrennten Kationen- und Anionenaustauscherharze des Mischbettfilters verwendeten Regeneriermittellösungen, jedoch mittels einer neuen Abnahmevorrichtung, die in Fig. 2 dargestellt ist und das kennzeichnende Merkmal der erfindungsgemässen Einrichtung darstellt, gleichzeitig, aber getrennt abgezogen.

Die Erfindung bezieht sich somit auch auf eine zur Durchführung des erfindungsgemässen Verfahrens geeignete Einrichtung mit einer Vorrichtung zur gleichzeitigen Abnahme der zur Regeneration der Ionenaustauscherharze des Mischbettfilters verwendeten Regeneriermittellösungen, die dadurch gekennzeichnet ist, dass oberhalb bzw. unterhalb der Trennfläche zwischen den auf hydraulischem Wege getrennten Ionenaustauscherharzen des Mischbettfilters zwei Flüssigkeitsableitsysteme in zwei horizontalen Ebenen angeordnet sind, so dass die Regeneriermittellösung für die obere Ionenaustauscherharzschicht durch das obere Flüssigkeitsableitsystem und die Regeneriermittellösung für die untere Ionenaustauscherharzschicht durch das untere Flüssigkeitsableitsystem getrennt abgezogen und zur Regeneration der dem Mischbettfilter vorgeschalteten Kationen- und Anionenaustauscherharzfilter verwendet werden.

Vorzugsweise haben die Flüssigkeitsableitsysteme voneinander einen vertikalen Abstand von 30 bis 300 mm oder von 3 bis 20% der Höhe der Ionenaustauscherharzschicht des Mischbettfilters.

Es ist auch besonders vorteilhaft, wenn in mindestens einer horizontalen Ebene zwischen den beiden Flüssigkeitsableitsystemen mindestens ein Flüssigkeitseinleitsystem angeordnet ist, durch das eine Trennflüssigkeit eingeleitet werden kann, um eine Vermischung der beiden Regeneriermittellösungen zu vermeiden.

Die getrennt abgezogenen Regeneriermittellösungen können dann getrennt in an sich bekannter Weise zur Regeneration der Ionenaustauscherharze der vorgeschalteten Kationen- und Anionenaustauscherharzfilter verwendet werden.

Fig. 2 zeigt einen Ausschnitt aus einer Kolonne zur Aufnahme des innigen Gemisches von Kationenaustauscherharz(en) und Anionenaustauscherharz(en), das in Fig. 2 zur Regeneration auf hydraulischem Wege in zwei Schichten 5, 6 aus Kationen- bzw. Anionenaustauscherharz(en) aufgetrennt worden ist. Oberhalb bzw. unterhalb der Trennfläche 4 zwischen den Ionenaustauscherharzen 5, 6 sind in zwei horizontalen Ebenen zwei Flüssigkeitsableitsysteme 1, 2 angeordnet; die Regeneriermittellösung für die obere Ionenaustauscherharzschicht 5 kann durch das obere Flüssigkeitsableitsystem 1 und die Regeneriermittellösung für die untere Ionenaustauscherharzschicht 6 durch das untere Flüssigkeitsableitsystem 2 abgezogen werden. Zwischen den beiden Flüssigkeitsableitsystemen 1, 2 ist in einer horizontalen Ebene ein Flüssigkeitseinleitsystem 3 zum Einleiten einer Trennflüssigkeit angeordnet.

Die erfindungsgemässe Einrichtung, die vorzugsweise, aber nicht notwendigerweise ein Flüssigkeitseinleitsystem 3 aufweist, kann mit Vorteil besonders dann verwendet werden, wenn zwecks Erzielung der höchstmöglichen Reinheit des erzeugten Reinwassers ein extrem hoher Regenerationsgrad des Mischbettfilters angestrebt wird. Durch die Anwendung der erfindungsgemässen Einrichtung kann ein unerwünschter Kontakt der im Bereich der Trennfläche 4 befindlichen Ionenaustauscherharze mit der für die Regenerierung des jeweils anderen Ionenaustauscherharztyps vorgesehenen Regeneriermittellösung, der durch die Unebenheiten der Trennfläche 4 entstehen könnte, vermieden werden. Durch die Verhinderung einer solchen Falschregeneration ("cross contamination") wird ein besserer Gesamtregenerationsgrad erreicht, obgleich die zwischen den beiden Flüssigkeitsableitsystemen 1, 2 befindlichen Ionenaustauscherharze überhaupt nicht regeneriert werden. Diese Funktion der Vorrichtung zur gleichzeitigen, aber getrennten Abnahme der zur Regeneration der Ionenaustauscherharze des Mischbettfilters verwendeten Regeneriermittellösungen kann auch ausgenützt werden, wenn das Mischbettfilter nicht als Arbeitsfilter betrieben wird oder wenn die Regeneriermittellösungen nicht zur Regeneration von dem Mischbettfilter vorgeschalteten Kationen- bzw. Anionenaustauscherharzfiltern verwendet werden sollen. Wenn keine Weiterverwendung der Regeneriermittellösungen beabsichtigt ist, erübrigt sich allerdings das Flüssigkeitseinleitsystem 3.

## Patentansprüche

1. Verfahren zur Entsalzung von salzhaltigen, wässrigen Lösungen mit einem Mischbettfilter, in dem Kationenaustauscherharz(e) und Anionenaustauscherharz(e) innig gemischt vorliegen und dem mindestens ein Kationenaustauscherharzfilter und mindestens ein Anionenaustauscherharzfilter vorgeschaltet sind, dadurch gekennzeichnet, dass
a) das nachgeschaltete Mischbettfilter nicht nur als Feinreinigungs- und/oder Sicherheitsfilter, sondern ebenso wie die vorgeschalteten Kationen- und Anionenaustauscherharzfilter als Arbeitsfilter betrieben wird und der Gehalt an Verunreinigungen nach den vorgeschalteten Kationen- und Anionenaustauscherharzfiltern noch mehr als 2% der ursprünglichen Verunreinigungen beträgt und
b) die zur Regeneration der Ionenaustauscherharze des Mischbettfilters verwendeten Regeneriermittellösungen danach zur Regeneration der Ionenaustauscherharze der dem Mischbettfilter vorgeschalteten Kationen- und Anionenaustauscherharzfilter dienen.

2. Verfahren nach Anspruch 1, dadurch gekennzeichnet, dass man die zur Regeneration der Ionenaustauscherharze des Mischbettfilters verwendeten Regeneriermittellösungen durch zwei oberhalb bzw. unterhalb der Trennfläche zwischen den auf hydraulischem Wege getrennten Ionenaustauscherharzen des Mischbettfilters in zwei horizontalen Ebenen angeordnete Flüssigkeitsableitsysteme gleichzeitig, aber getrennt abzieht.

3. Verfahren nach Anspruch 2, dadurch gekennzeichnet, dass man durch mindestens ein in mindestens einer horizontalen Ebene zwischen den beiden Flüssigkeitsableitsystemen angeordnetes Flüssigkeitseinleitsystem mindestens eine Flüssigkeit einleitet, um die beiden Regeneriermittellösungen voneinander getrennt zu halten.

4. Einrichtung, die sich zur Durchführung des Verfahrens nach Anspruch 1 oder 2 eignet, mit einem Mischbettfilter, dem mindestens ein Kationenaustauscherharzfilter und mindestens ein Anionenaustauscherharzfilter vorgeschaltet sind, und mit einer Vorrichtung zur gleichzeitigen Abnahme der zur Regeneration der Ionenaustauscherharze des Mischbettfilters verwendeten Regeneriermittellösungen, dadurch gekennzeichnet, dass oberhalb bzw. unterhalb der Trennfläche (4) zwischen den auf hydraulischem Wege getrennten Ionenaustauscherharzen (5, 6) des Mischbettfilters zwei Flüssigkeitsableitsysteme (1, 2) in zwei horizontalen Ebenen angeordnet sind, so dass die Regeneriermittellösung für die obere Ionenaustauscherharzschicht (5) durch das obere Flüssigkeitsableitsystem (1) und die Regeneriermittellösung für die untere Ionenaustauscherharzschicht (6) durch das untere Flüssigkeitsableitsystem (2) getrennt abgezogen und zur Regeneration der dem Mischbettfilter vorgeschalteten Kationen- und Anionenaustauscherharzfilter verwendet werden.

5. Einrichtung nach Anspruch 4, dadurch gekennzeichnet, dass die Flüssigkeitsableitsysteme (1, 2) voneinander einen vertikalen Abstand von 30 bis 300 mm oder von 3 bis 20 % der Höhe der Ionenaustauscherharzschicht des Mischbettfilters haben.

6. Einrichtung nach Anspruch 4 oder 5, dadurch gekennzeichnet, dass in mindestens einer horizontalen Ebene zwischen den beiden Flüssigkeitsableitsystemen (1, 2) mindestens ein Flüssigkeitseinleitsystem (3) angeordnet ist.

## Claims

1. Process for desalting salt-containing aqueous solutions using a mixed-bed filter in which cation-exchange resin(s) and anion-exchange resin(s) are present intimately mixed and upstream of which are connected at least one cation-exchange resin filter and at least one anion-exchange resin filter, characterized in that
a) the downstream mixed-bed filter is operated not only as a fine purification and/or safety filter but also as a working filter just like the upstream cation- and anion-exchange resin filters and the content of impurities after the upstream cation- and anion-exchange resin filters is still more than 2 % of the original impurities and
b) the regeneration medium solutions used for the regeneration of the ion-exchange resins of the mixed-bed filter subsequently serve for the regeneration of the ion-exchange resins of the cation- and anion-exchange resin filters upstream of the mixed-bed filter.

2. Process according to Claim 1, characterized in that the regeneration medium solutions used for the regeneration of the ion-exchange resins of the mixed-bed filter are withdrawn simultaneously but separately through two liquid-withdrawal systems arranged in two horizontal planes above and below the separation surface between the hydraulically separated ion-exchange resins of the mixed-bed filter.

3. Process according to Claim 2, characterized in that at least one liquid is introduced through at least one liquid-introduction system arranged in at least one horizontal plane between the two liquid-withdrawal systems, in order to keep the two regeneration medium solutions separate from each other.

4. Device which is suitable for carrying out the process according to Claim 1 or 2 having a mixed-bed filter upstream of which are connected at least one cation-exchange resin filter and at least one anion-exchange resin filter and having an apparatus for the simultaneous withdrawal of the regeneration medium solutions used for the regeneration of the ion-exchange resins of the mixed-bed filter, characterized in that two liquid withdrawal systems (1, 2) are arranged in two horizontal planes above and below the separation surface (4) between the hydraulically separated ion-exchange resins (5, 6) of the mixed-bed filter, so that the regeneration medium solution for the upper ion-exchange resin layer (5) is taken off separately through the upper liquid-withdrawal system (1) and the regeneration medium solution for the lower ion-exchange resin layer (6) is taken off separately through the lower liquid-withdrawal system (2) and are used for the regeneration of the cation- and anion-exchange resin filters upstream of the mixed-bed filter.

5. Device according to Claim 4, characterized in that the liquid-withdrawal systems (1, 2) have a vertical spacing from one another of 30 to 300 mm or 3 to 20 % of the height of the ion-exchange resin layer of the mixed-bed filter.

6. Device according to Claim 4 or 5, characterized in that at least one liquid-introduction system (3) is arranged in at least one horizontal plane between the two liquid-withdrawal systems (1, 2).

## Revendications

1. Procédé de dessalement de solutions aqueuses salines au moyen d'un filtre à lit mixte qui contient, en mélange intime, une (des) résine(s) échangeuse(s) de cations et une (des) résine(s) échangeuse(s) d'anions et en amont duquel sont disposés au moins un filtre à résine échangeuse de cations et au moins un filtre à résine échangeuse d'anions, caractérisé en ce que
a) le filtre à lit mixte dispose en aval ne sert pas seulement comme filtre de purification fine et/ou comme filtre de sécurité mais, aussi bien que les filtres de résine échangeuse de cations et d'anions disposés en amont, en tant que filtre opérant et que la teneur en impuretés après les filtres de résine échangeuse de cations et d'anions disposés en amont est encore supérieure à 2% de la teneur initiale en impuretés et
b) les solutions d'agent de régénération utilisées pour régénérer les résines échangeuses d'ions du filtre à lit mixte servent ensuite à régénérer les résines échangeuses d'ions des filtres à résines échangeuses de cations et d'anions disposés en amont du filtre à lit mixte.

2. Procédé selon la revendication 1, caractérisé en ce que l'on évacue simultanément, mais séparément, les solutions d'agent de régénération utilisées pour régénérer les résines échangeuses d'ions du filtre à lit mixte, au moyen de deux systèmes d'évacuation de liquide disposés sur deux plans horizontaux, respectivement au-dessus et au-dessous de la surface de séparation entre les résines échangeuses d'ions du filtre à lit mixte, séparées par voie hydraulique.

3. Procédé selon la revendication 2, caractérisé en ce que l'on introduit au moins un liquide par au moins un système d'alimentation en liquide disposé sur au moins un plan horizontal entre les deux systèmes d'évacuation de liquide, pour maintenir les deux solutions d'agent de régénération séparées l'une de l'autre.

4. Installation propre à l'exécution du procédé selon la revendication 1 ou 2, comprenant un filtre à lit mixte en amont duquel sont disposés au moins un filtre à résine échangeuse de cations et au moins un filtre à résine échangeuse d'anions, et un dispositif pour évacuation simultanée des solutions d'agent de régénération utilisées pour régénérer les résines échangeuses d'ions du filtre à lit mixte, caractérisée en ce que deux systèmes d'évacuation de liquide (1, 2) sont disposés sur deux plans horizontaux, respectivement au-dessus et au-dessous de la surface de séparation (4) entre les résines échangeuses d'ions (5, 6) du filtre à lit mixte, séparées par voie hydraulique, de telle sorte que la solution d'agent de régénération pour la couche supérieure de résine échangeuse d'ions (5) et la solution d'agent de régénération pour la couche inférieure de résine échangeuse d'ions (6) sont évacuées séparément, respectivement par le système supérieur d'évacuation de liquide (1) et par le système inférieur d'évacuation de liquide (2) et qu'elles sont utilisées pour régénérer les filtres à résines échangeuses de cations et d'anions disposés en amont du filtre à lit mixte.

5. Installation selon la revendication 4, caractérisée en ce que les systèmes d'évacuation de liquide (1, 2) ont entre eux un espacement vertical de 30 à 300 mm ou de 3 à 20% de la hauteur de la couche de résines échangeuses d'ions du filtre à lit mixte.

6. Installation selon la revendication 4 ou 5, caractérisée en ce qu'au moins un système d'alimentation en liquide (3) est disposé sur au moins un plan horizontal entre les deux systèmes d'évacuation de liquide (1, 2).
